# EUROPEAN PATENT SPECIFICATION

(11) **EP 1 083 730 B1**
(45) Date of publication and mention of the grant of the patent: **14.11.2007**
(21) Application number: 00119564.3
(22) Date of filing: 07.09.2000
(51) Int. Cl.: H04L 12/56, H04M 3/42

(54) **Callback system and method for internet phone**
Rückrufsystem und Verfahren für Internet telefon
Système et procédé de rappel pour téléphone Internet

(30) Priority: 07.09.1999 KR 9937875
(43) Date of publication of application: 14.03.2001
(73) Proprietor: SAMSUNG ELECTRONICS CO., LTD., Suwon-City, Kyungki-do (KR)
(72) Inventor: Ryu, Yeon-Seung, Kangnam-gu, Seoul (KR)
(74) Representative: Grünecker, Kinkeldey, Stockmair & Schwanhäusser Anwaltssozietät

(56) References cited:
- EP-A- 0 932 282
- WO-A-97/31492
- WO-A-99/08434

## Description

The present invention relates generally to a callback method for an Internet phone, according to the subject-matter of independent claim 1 and to a corresponding system according to the subject-matter of independent claim 3. The present invention relates, in particular, to a system and method for performing callback to notify a call available state, when a network bandwidth becomes wide enough to secure the call quality in an Internet phone which receives call admission through an admission control server.

In recent, with an explosive increase in utilization of Internet, there are provided a great variety of Internet services. Particularly, even in a field of telephone service, there is a tendency to integrate a voice service, which was provided using the existing PSTN (Public Switched Telephone Network), with a data service using an Internet protocol (IP). The PSTN employs a circuit switching communication method in which a private line is connected between both terminals, whereas the Internet protocol employs a packet switching communication method in which data is packetized and the packets of several paths are multiplexed. In the circuit switching communication, since a path between both terminals is fixed, it is possible to guarantee that the voice data is transmitted at 64Kbps. However, in the packet switching communication, since the network resources are shared, it is not possible to guarantee a specific time required for transmitting the packets. Nevertheless, the Internet phone service is widely used, because the communication terminals share the network resources, thereby reducing the expenses.

Further, in order to transmit voice and image data through Internet which employs the packet switching method, there is required a new method for guaranteeing the communication quality. For this, a resource reservation protocol (RSVP), a real-time protocol (RTP), and an admission control server have been proposed. In addition, for the Internet phone, H.323 and SIP (Session Initiation Protocol) are specified by ITU-T (International Telecommunication UnionTelecommunication standardization sector). ITU-T H.323 defines an admission control server (or gatekeeper) having a communication admission function.

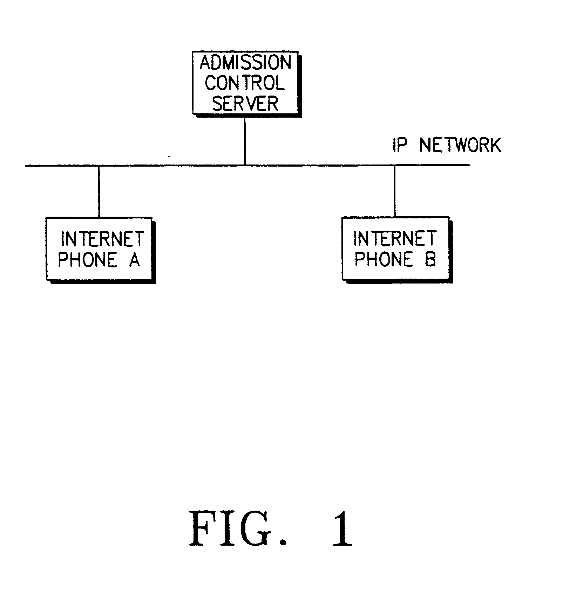

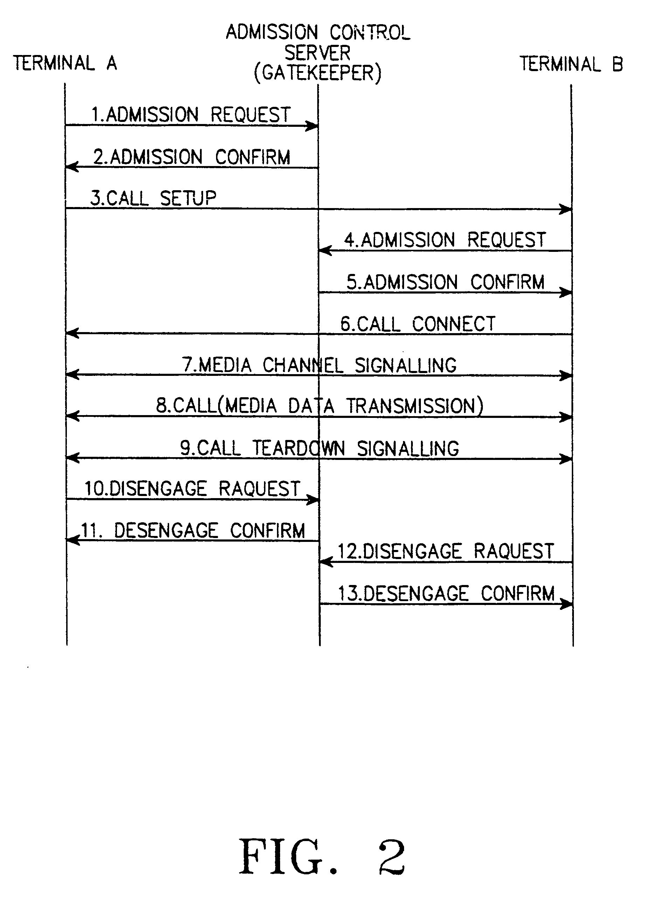

FIG. 1 shows a general Internet phone system, and FIG. 2 shows a call signaling procedure of a conventional Internet phone.

Referring to FIGS. 1 and 2, an Internet phone A should receive call admission from an admission control server to connect a call to an Internet phone B. According to ITU-T H.323, the Internet phone A sends an admission request message to the admission control server (or gatekeeper) before the call, so as to notify the bandwidth. The admission control server then sends an admission confirm message to the Internet phone A in response to the admission request message. Upon receipt of the admission confirm message, the Internet phone A sends a call setup message to the Internet phone B. Upon receipt of the call setup message, the Internet phone B sends an admission request message to the admission control server so as to notify the bandwidth. The admission control server then sends an admission confirm message to the Internet phone B in response to the admission request message. Upon receipt of the admission confirm message, the Internet phone B sends a call connect message to the Internet phone A. Thereafter, media channel signaling is performed to form a channel between the Internet phone A and the Internet phone B. Subsequently, media data is exchanged between the Internet phone A and the Internet phone B. Thereafter, call teardown signaling is performed between the Internet phone A and the Internet phone B. In the meantime, when the call is ended, the Internet phone A sends a disengage request message to the admission control server to notify that use of the bandwidth is completed. The admission control server then sends a disengage confirm message to the Internet phone A in response to the disengage request message. In addition, the Internet phone B sends a disengage request message to the admission control server to notify that use of the bandwidth is completed. The admission control server then sends a disengage confirm message to the Internet phone B in response to the disengage request message.

Such an admission control server should have resources of its network zone, and when a certain Internet phone requests a network resource, e.g., network bandwidth, required for the call, the admission control server determines whether it is possible to guarantee the call quality by using the present information and then notifies whether to admit the call.

However, since the Internet phone admission-rejected by the admission control server cannot connect the call and cannot know when the call is available, the user of the Internet phone will repeatedly retry the call even though the call cannot be connected, thereby causing a waste of the network resources. It is known from EP-A-O 932 282 that congestion at a network node can be aggravated by having too many TCP connections. A method of avoiding the bad effects of too many TCP connections is to limit the number of connections. Limiting the number of connections is achieved by an admission control (10) which delays or even discards the connection set-up packets. TCP traffic flows are monitored to generate packet loss characteristics and when a certain condition is met, a connection request queue is disabled. WO 97/31492 A discloses a method and system for enabling and controlling telephony over existing networks, e.g. ATM networks, the internet or other data networks, uses essentially distributed control processing employing intelligence in the typical end-user devices, e.g. workstations or personal computers. Parallel use of a real-time channel (to provide the needed direct voice communication) and a control channel (for basic services like connection buildup and termination and for supplementary services) essentially established by and from the user's workstations (and in principle excluding the PBXs) allows implementation of practically any imaginable function.

It is, therefore, the object of the present invention to provide a callback system and method for performing callback to notify a call available state, when a network bandwidth becomes wide enough to secure the call quality in an Internet phone which receives call admission through an admission control server.

This object is solved by the subject matter of the independent claims. Referred embodiments are defined by the subject matter of the dependent claims.

To achieve the above object, there is provided a callback method for an Internet phone which receives call admission through an admission control server. The callback method comprises sending an admission request message for requesting admission of a necessary network bandwidth from an originating Internet phone to the admission control server using a user interface; upon receipt of the admission request message from the originating Internet phone, determining in the admission control server whether the requested network bandwidth is acceptable or not; sending an admission reject message to the originating Internet phone, when the admission-requested bandwidth is not acceptable; upon receipt of the admission reject message, sending a callback request message from the originating Internet phone to the admission control server; and upon receipt of a callback request message from the originating Internet phone, sending a callback message from the admission control server to the originating Internet phone when the network bandwidth requested by the originating Internet phone is secured.

The above and other objects, features and advantages of the present invention will become more apparent from the following detailed description when taken in conjunction with the accompanying drawings in which:
FIG. 1 is a diagram illustrating a general Internet phone system;
FIG. 2 is a flow diagram illustrating a call signaling procedure of a conventional Internet phone;
FIG. 3 is a diagram illustrating an Internet phone system according to an embodiment of the present invention; and
FIG. 4 is a flow diagram illustrating a callback process according to an embodiment of the present invention.

A preferred embodiment of the present invention will be described herein below with reference to the accompanying drawings. In the following description, well-known functions or constructions are not described in detail since they would obscure the invention in unnecessary detail.

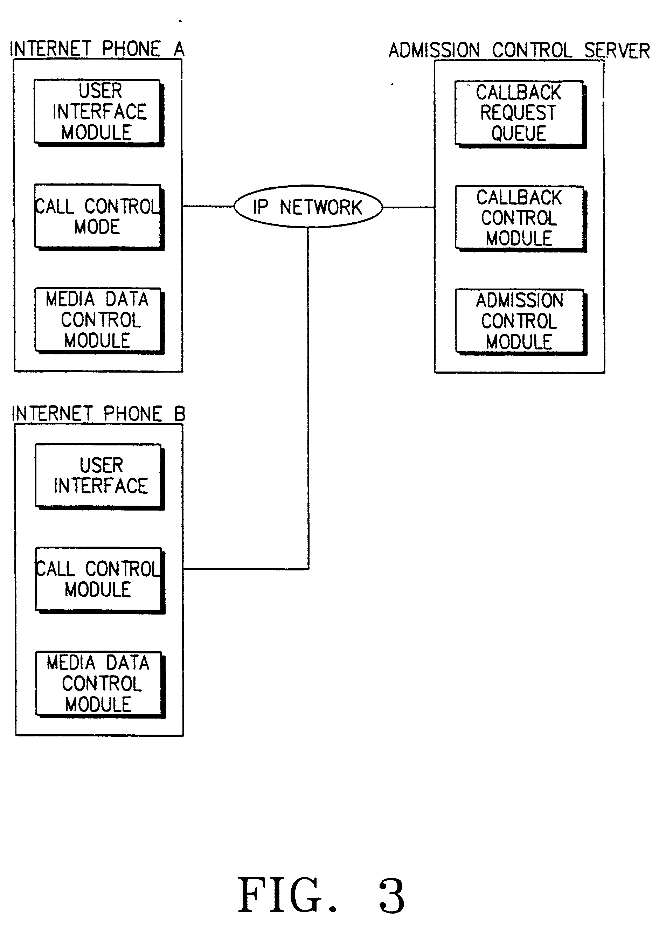

FIG. 3 shows an Internet phone system according to an embodiment of the present invention. Referring to FIG. 3, an Internet phone includes a user interface module for controlling data input/output by the user, a call control module for controlling call back signaling, and a media data control module for controlling transmission of multimedia data. An admission control server includes an admission control module for processing an admission request message, a callback request queue for waiting a callback request message, and a callback control module for processing the callback request message.

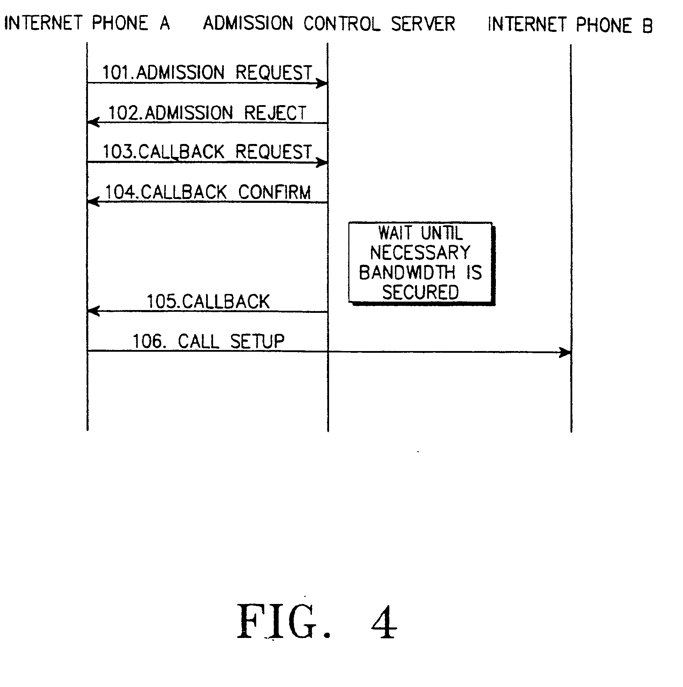

FIG. 4 shows a callback process according to an embodiment of the present invention.

Referring to FIGS. 3 and 4, when a user of an Internet phone A dials to make a phone call to an Internet phone B, the Internet phone A sends an admission request message to the admission control server in step 101, to request a necessary network bandwidth. The admission control server then examines whether it is possible to accept the network bandwidth requested by the Internet phone A. When the requested network bandwidth is acceptable, the admission control server performs the normal call process shown in FIG. 2. Otherwise, when the requested network bandwidth is not acceptable, the admission control server sends an admission reject message to the Internet phone A in step 102. The Internet phone A then displays a call rejected state on a display for the user, using the user interface function. The use will then decide whether to perform callback or not. If the user desires to perform callback, he or she will input a callback request command using the user interface function. However, if the user does not desire to perform callback, he or she will not input the callback request command, thus ending the procedure. Upon receipt of the callback request command, the Internet phone A sends a callback request message to the admission control server in step 103. The admission control server then sends a callback confirm message to the Internet phone A in response to the callback request message, stores the callback request message in the callback request queue, and waits until the necessary bandwidth is secured, in step 104. Thereafter, when the necessary bandwidth is secured, the admission control server sends a callback message to the Internet phone A in step 105. The Internet phone A then attempts to dial the Internet phone B using the user interface function and processes the call signaling in step 106.

In this manner, the novel Internet phone can effectively use the network resources.

## Claims

1. A callback method for an Internet phone which receives call admission through an admission control server, comprising the steps of:
sending an admission request message for requesting admission of a necessary network bandwidth from an originating Internet phone to the admission control server using a user interface;
upon receipt of the admission request message from the originating Internet phone, determining in the admission control server whether the requested network bandwidth is acceptable or not;
sending an admission reject message to the originating Internet phone, when the admission-requested bandwidth is not acceptable;
upon receipt of the admission reject message, sending a callback request message from the originating Internet phone to the admission control server; and
upon receipt of a callback request message from the originating Internet phone, sending a callback message from the admission control server to the originating Internet phone when the network bandwidth requested by the originating Internet phone is secured.

2. The callback method according to claim 1, **characterized in that** the steps of sending an admission request message comprise sending the admission request message when the originating Internet phone dials to page a termination side using a user interface.

3. A callback system for an Internet phone which receives call admission through an admission control server, comprising:
said Internet phone including a user interface function for controlling input/output of a user, a call control function for controlling callback signaling, comprising the sending of a callback request message to the admission control server and the receiving of a callback request message from the admission control server, and a media data control function for controlling transmission of multimedia data; and
said admission control server including an admission control function for processing an admission request message, a callback request queue for storing of a waiting callback request message received from the lP phone, and a callback control function for processing a callback request message comprising sending of a callback message to the IP phone when necessary bandwidth is secure.

## Patentansprüche

1. Rückrufverfahren für ein Internettelefon, das Call-Admission durch einen Admission-Control-Server empfängt und das die folgenden Schritte umfasst:
Senden einer Admission-Anforderungsnachricht zum Anfordern von Admission einer erforderlichen Netzwerkbandbreite von einem Ursprungs-Internettelefon an den Admission-Control-Server mit Hilfe einer Benutzerschnittfläche,
nach Empfang der Admission-Anforderungsnachricht von dem Ursprungs-Internettelefon, Bestimmen, in dem Admission-Control-Server, ob die angeforderte Netzwerkbandbreite akzeptabel ist oder nicht,
Senden einer Admission-Reject-Nachricht an das Ursprungs-Internettelefon, wenn die Bandbreite, für die Admission angefordert wird, nicht akzeptabel ist,
nach Empfang der Admission-Reject-Nachricht, Senden einer Rückrufanforderungsnachricht von dem Ursprungs-Internettelefon an den Admission-Control-Server und
nach Empfang einer Rückrufanforderungsnachricht von dem Ursprungs-Internettelefon, Senden einer Rückrufnachricht von dem Admission-Control-Server zu dem Ursprungs-Internettelefon, wenn die durch das Ursprungs-Internettelefon angeforderte Netzwerkbandbreite sichergestellt ist.

2. Rückrufverfahren nach Anspruch 1, **dadurch gekennzeichnet, dass** die Schritte des Sendens einer Admission-Anforderungsnachricht das Senden der Admission-Anforderungsnachricht, wenn das Ursprungs-Internettelefon wählt, um eine Anschlussseite aufzurufen, mit Hilfe einer Benutzerschnittstelle umfassen.

3. Rückrufsystem für ein Internettelefon, das Call-Admission durch einen Admission-Control-Server empfängt, umfassend:
das Internettelefon einschließlich einer Benutzerschnittstellenfunktion zum Steuern der Eingabe/Ausgabe eines Benutzers, einer Rufsteuerfunktion zum Steuern von Rückrufsignalisierung, die das Senden einer Rückrufanforderungsnachricht zu dem Admission-Control-Server und das Empfangen einer Rückrufanforderungsnachricht von dem Admission-Control-Server umfasst, und einer Mediendaten-Steuerfunktion zum Steuern der Übertragung von Multimediadaten und
den Admission-Control-Server einschließlich einer Admission-Control-Funktion für die Verarbeitung einer Admission-Anforderungsnachricht, einer Rückrufanforderungswarteschlange zum Speichern einer von dem IP-Telefon empfangenen wartenden Rückrufanforderungsnachricht und einer Rückrufsteuerfunktion für die Verarbeitung einer Rückrufanforderungsnachricht, die das Senden einer Rückrufnachricht an das IP-Telefon, wenn die erforderliche Bandbreite sichergestellt ist, umfasst.

## Revendications

1. Procédé de rappel pour un téléphone Internet qui reçoit une admission d'appel par l'intermédiaire d'un serveur de commande d'admission, comprenant les étapes consistant à :
envoyer un message de demande d'admission pour demander l'admission d'une largeur de bande de réseau nécessaire depuis un téléphone Internet servant d'origine vers le serveur de commande d'admission en utilisant une interface utilisateur ;
lors de la réception du message de demande d'admission en provenance du téléphone Internet servant d'origine, déterminer dans le serveur de commande d'admission si la largeur de bande de réseau demandée est ou non acceptable ;
envoyer un message de rejet d'admission au téléphone Internet servant d'origine, lorsque la largeur de bande d'admission demandée n'est pas acceptable ;
lors de la réception du message de rejet d'admission, envoyer un message de demande de rappel depuis le téléphone Internet servant d'origine vers le serveur de commande d'admission ; et
lors de la réception d'un message de demande de rappel en provenance du téléphone Internet servant d'origine, envoyer un message de rappel depuis le serveur de commande d'admission vers le téléphone Internet servant d'origine lorsque la largeur de bande de réseau demandée par le téléphone Internet servant d'origine est garantie.

2. Procédé de rappel selon la revendication 1,
**caractérisé en ce que** les étapes consistant à envoyer un message de demande d'admission comprennent l'envoi du message de demande d'admission lorsque le téléphone Internet servant d'origine compose un numéro pour localiser un côté terminaison en utilisant une interface utilisateur.

3. Système de rappel pour un téléphone Internet qui reçoit une admission d'appel par l'intermédiaire d'un serveur de commande d'admission, comprenant :
ledit téléphone Internet incluant une fonction d'interface utilisateur pour commander l'entrée/la sortie d'un utilisateur, une fonction de commande d'appel pour commander la signalisation de rappel, comprenant l'envoi d'un message de demande de rappel au serveur de commande d'admission et la réception d'un message de demande de rappel en provenance du serveur de commande d'admission, et une fonction de commande de données multimédia pour commander la transmission de données multimédia ; et
ledit serveur de commande d'admission comprenant une fonction de commande d'admission pour traiter un message de demande d'admission, une file d'attente de demandes de rappel pour stocker un message de demande de rappel en attente reçu en provenance du téléphone IP, et une fonction de commande de rappel pour traiter un message de demande de rappel comprenant l'envoi d'un message de rappel au téléphone IP lorsque la largeur de bande nécessaire est garantie.
